# EUROPÄISCHE PATENTSCHRIFT

(11) **EP 2 944 431 B1**
(45) Veröffentlichungstag und Bekanntmachung des Hinweises auf die Patenterteilung: **20.09.2017**
(21) Anmeldenummer: 15166230.1
(22) Anmeldetag: 04.05.2015
(51) Int. Cl.: B25F 5/00, H01M 10/42

(54) **VERFAHREN ZUM DATENAUSTAUSCH ZWISCHEN ELEKTROWERKZEUGEN UND EINEM AKKU**
METHOD FOR EXCHANGING DATA BETWEEN A BATTERY PACK AND A PLURALITY OF ELECTRIC TOOLS
PROCÉDÉ D'ÉCHANGE DE DONNÉES ENTRE UNE PLURALITÉ D'OUTILS ÉLECTRIQUES ET UN ACCUMULATEUR

(30) Priorität: 13.05.2014 DE 102014106713
(43) Veröffentlichungstag der Anmeldung: 18.11.2015
(73) Patentinhaber: Vorwerk & Co. Interholding GmbH, 42275 Wuppertal (DE)
(72) Erfinder: Meggle, Martin, 33442 Herzebrock (DE)
(74) Vertreter: Müller, Enno

(56) Entgegenhaltungen:
- EP-A2- 2 505 316
- WO-A2-2013/014914
- DE-A1-102009 045 946

## Beschreibung

Die Erfindung betrifft ein Verfahren zum Datenaustausch mit einer Mehrzahl von Elektrowerkzeugen, welche geeignet sind, austauschbare Akkus aufzunehmen.

Die Erfindung betrifft darüber hinaus einen Akku und ein Set, welcher bzw. welches insbesondere ausgebildet ist, ein erfindungsgemäßes Verfahren durchzuführen, wobei das Set eine Mehrzahl von Elektrowerkzeugen sowie einen erfindungsgemäßen Akku aufweist.

Verfahren dieser Art sind im Stand der Technik bekannt. Diese dienen dazu, Steuerdaten von einer externen Rechnereinheit auf Elektrowerkzeuge zu übertragen und umgekehrt. Diese Steuerdaten können beispielsweise Softwareprogramme oder Updates von Softwareprogrammen sein. Beispielsweise kann ein Softwareprogramm eine Laderoutine für einen Akku eines Elektrowerkzeugs zur Verfügung stellen.

Für einen Datenaustausch zwischen einer externen Rechnereinheit und einem Elektrowerkzeug ist es im Stand der Technik bekannt, das Elektrowerkzeug mit einem Funkmodul auszustatten, über welches Daten von der externen Rechnereinheit an das Elektrowerkzeug übertragen oder Daten aus einem Datenspeicher des Werkzeugs ausgelesen und an eine externe Rechnereinheit übertragen werden können. Zu diesem Zweck verfügen die Elektrowerkzeuge regelmäßig über Recheneinheiten, mit welchen die Daten - beispielsweise Laderoutinen zur Optimierung der Nutzbarkeit eines Akkus - gespeichert und ausgeführt werden können.

Die Druckschrift DE 10 2011 084 766 A1 offenbart ein Elektrowerkzeug mit einer digitalen Steuerungseinrichtung, wobei eine Schnittstelle der digitalen Steuerungseinrichtung zwischen einem Normalbetrieb und einem Kommunikationsbetrieb umschaltbar ist. Im Normalbetrieb werden Daten, wie beispielsweise die Akkutemperatur, an die digitale Steuerungseinrichtung übertragen, während im Kommunikationsbetrieb die gespeicherten Daten von der digitalen Steuerungseinrichtung des Elektrowerkzeugs an eine externe Rechnereinheit übertragen werden. Die Übertragung der Daten an die externe Rechnereinheit kann dabei vorteilhaft mittels Kabel oder Funk, beispielsweise WLAN, erfolgen.

Die Druckschrift DE 20 2006 014 606 U1 offenbart ebenfalls ein Elektrowerkzeug mit einer drahtlosen Übermittlungseinrichtung zur Übermittlung von Daten, Parametern oder dergleichen zwischen dem Elektrowerkzeug und einer übergeordneten Steuereinheit. Die Übermittlungseinrichtung weist dabei zumindest ein austauschbares Funkmodul auf. Das Funkmodul kann insbesondere ein WLAN-Modul sein. Die übermittelten Daten beinhalten beispielsweise vorgegebene Steuerdaten für das Elektrowerkzeug, wie beispielsweise bei einem Betrieb des Elektrowerkzeugs anzuwendende Drehzahlen oder dergleichen.

Obwohl sich diese im Stand der Technik bekannten Verfahren bei einem Datenaustausch zwischen einer externen Rechnereinheit und einem einzelnen Elektrowerkzeug bewährt haben, sind diese nachteilig bei einem Datenaustausch mit einer Mehrzahl von Elektrowerkzeugen. Insbesondere setzen die bekannten Verfahren voraus, dass jedes Werkzeug für den Datenaustausch mit einer externen Rechnereinheit ein eigenes Funkmodul aufweist. Dies ist jedoch für den gewünschten Datenaustausch mit einer Mehrzahl von Elektrowerkzeugen sowohl technisch aufwendig als auch teuer.

Darüber hinaus existieren im Stand der Technik Elektrowerkzeuge, welche einen Energiespeicher, eine Schnittstelle zur Datenübertragung und einen einen Datenspeicher aufweisenden Akku aufweisen.

EP 2 505 316 A2 betrifft bspw. ein Elektrowerkzeug mit einem Akku, in dessen Datenspeicher den Akku betreffende Informationen hinterlegt sind, die über eine Schnittstelle zur Datenübertragung an das Elektrowerkzeug übertragen werden. Eine Motorsteuerung des Elektrowerkzeugs steuert eine Beschleunigungsrate des Motors in Abhängigkeit von den den Akku betreffenden Informationen.

Die Druckschrift DE 10 2009 045 946 A1 betrifft ein Elektrowerkzeug mit einer Steuereinheit, die dazu vorgesehen ist, einen Arbeitsvorgang von Messinformationen abhängig zu beeinflussen, welche durch ein Zusatzmessgerät ermittelt wurden. Insbesondere nimmt die Steuereinheit die Messinformationen auf, verarbeitet diese und gibt eine Steuer- und/ oder Regelgröße aus.

Die Druckschrift WO 2013/014914 A2 betrifft einen Adapter für ein Elektrowerkzeug mit einem entnehmbaren Akku. Der Adapter verfügt über eine Verbindungseinrichtung zur Verbindung mit nur dem einen Elektrowerkzeug, eine Steuerung sowie einen Speicher und eine Kommunikationsschnittstelle. Über die Kommunikationsschnittstelle können Steuerdaten für das Elektrowerkzeug von einer externen Einheit auf den Akku und von dort aus auf das Elektrowerkzeug übertragen werden.

Nachteilig dabei ist, dass die vorgenannten Verfahren nur einen Datenaustausch zwischen dem Akku und einem einzigen Elektrowerkzeug erlauben.

Es ist daher Aufgabe der vorliegenden Erfindung, ein technisch einfaches und kostengünstiges Verfahren zum Datenaustausch mit einer Mehrzahl von Elektrowerkzeugen zu schaffen.

Zur Lösung der vorgenannten Aufgabe schlägt die Erfindung ein Verfahren vor, bei welchem ein mit jedem der Elektrowerkzeuge kompatibler, einen Energiespeicher, eine Schnittstelle zur Datenübertragung und einen Datenspeicher aufweisender Akku Steuerdaten für mehrere der Elektrowerkzeuge von einer externen Rechnereinheit empfängt und in dem Datenspeicher speichert, wobei der Akku mit einem ersten der Mehrzahl von Elektrowerkzeugen verbunden wird, wobei die für dieses erste Elektrowerkzeug bestimmten Steuerdaten von dem Datenspeicher des Akkus in einen Datenspeicher des ersten Elektrowerkzeugs übertragen werden, und woraufhin der Akku aus dem ersten Elektrowerkzeug wieder entfernt wird und in ein zweites Elektrowerkzeug eingeführt wird, wobei die für das zweite Elektrowerkzeug bestimmten Steuerdaten von dem Datenspeicher des Akkus in einen Datenspeicher des verbundenen zweiten Elektrowerkzeugs übertragen werden.

Das erfindungsgemäße Verfahren macht somit Gebrauch von einem speziellen Akku, welcher neben seiner eigentlichen Funktion der Speicherung von Energie auch die Möglichkeit zu einem Datenaustausch mit einer Mehrzahl von Elektrowerkzeugen bietet. Dieser Akku kann dabei für alle Elektrowerkzeuge, welche geeignet sind, den Akku aufzunehmen, gesammelt Steuerdaten von der externen Rechnereinheit empfangen und diese in seinem Datenspeicher speichern. Anschließend oder auch zeitgleich wird der Akku - wie auch bei herkömmlichen Akkus üblich - mit einem der Elektrowerkzeuge verbunden. Dabei werden die für das jeweilige Elektrowerkzeug bestimmten Steuerdaten von dem Datenspeicher des Akkus in den Datenspeicher des verbundenen Elektrowerkzeugs übertragen. Sofern nun nacheinander alle Elektrowerkzeuge, für welche Steuerdaten von der externen Rechnereinheit an den Akku übertragen wurden, mit dem Akku verbunden werden, können alle Elektrowerkzeuge mit aktuellen Steuerdaten versorgt werden. Dies ist besonders vorteilhaft, wenn es sich beispielsweise um die Installation von Programmen, aktualisierten Programmversionen oder auch neuer Betriebsroutinen für die Elektrowerkzeuge handelt.

Vorteilhaft werden die Steuerdaten gemäß der Erfindung mittels einer mit der externen Rechnereinheit verbundenen Akkuladestation an den Akku übertragen. Der Akku wird wie gewohnt für den Ladevorgang mit der Akkuladestation verbunden. Dabei können die Steuerdaten während des Ladevorgangs übertragen werden oder alternativ auch nach Beendigung des Ladevorgangs. Die Akkuladestation empfängt die Steuerdaten von der externen Rechnereinheit beispielsweise über eine Datenverbindung per Datenkabel oder auch kabellos beispielsweise über eine Funkschnittstelle.

Alternativ zu dem vorgenannten Datenaustausch mittels der Akkuladestation können die Steuerdaten auch per kabelloser Datenübertragung von der externen Rechnereinheit an den Akku übertragen werden. Dadurch ist die Datenübertragung völlig losgelöst von der Aufladung des Akkus. Die kabellose Datenübertragung kann dabei sowohl die Übertragung von Funksignalen, beispielsweise per Bluetooth oder WLAN, als auch die Übertragung von optischen Signalen beinhalten.

Es ist insbesondere vorgesehen, dass die Steuerdaten Programme zur Installation auf dem jeweiligen Elektrowerkzeug aufweisen. Diese Programme können erstmalig auf dem Elektrowerkzeug zu installierende Programme oder auch Programm-Updates sein. Darüber hinaus können die Steuerdaten auch Vorgaben für besondere Betriebsroutinen beinhalten, beispielsweise für einen Energiesparmodus oder auch den Betrieb des Werkzeugs mit einer festgelegten Drehzahl oder ähnliches.

Es kann weiterhin vorgesehen sein, dass der Akku eine Information ausgibt, wenn dieser Steuerdaten für eines oder mehrere der Elektrowerkzeuge von einer externen Rechnereinheit empfangen hat. Diese Ausgabe der Information kann mittels einer Anzeigeeinheit, beispielsweise einer an dem Akku angeordneten Diode, erfolgen. Alternativ kann auch ein an der Akkuladestation angeordnetes Anzeigeelement blinken, falls der die Steuerdaten aufweisende Akku damit verbunden ist. Insbesondere kann es auch vorgesehen sein, dass der Akkuladestation eine Anzeigeeinheit zugeordnet ist, welche eine Information darüber ausgibt, für welches Werkzeug die in dem Akku gespeicherten Daten bestimmt sind. Ebenfalls kann auch das Elektrowerkzeug selbst leuchten, wenn es mit dem die Steuerdaten enthaltenden Akku verbunden ist und diese Steuerdaten insbesondere für genau dieses Elektrowerkzeug bestimmt sind.

Schließlich sieht die Erfindung vor, dass der Akku auch geeignet ist, Betriebsdaten von einem oder mehreren der Elektrowerkzeuge zu empfangen. Insofern eignet sich das vorgeschlagene Verfahren nicht nur für den Datenaustausch von dem Akku an die Elektrowerkzeuge, sondern umgekehrt auch zum Datenaustausch von einem oder mehreren Elektrowerkzeugen an den Akku. Bei den an den Akku übermittelten Betriebsdaten des Elektrowerkzeugs kann es sich um Angaben zu der Benutzungshäufigkeit des jeweiligen Elektrowerkzeugs, während des Betriebs aufgetretene Drücke, Drehzahlen, Temperaturen oder ähnliches handeln. Die von dem Akku empfangenen Betriebsdaten können von dem Akku zur Auswertung an eine externe Rechnereinheit weitergeleitet werden. Die Weiterleitung kann dabei ebenfalls beim Laden des Akkus in der Akkuladestation oder per Datenkabel oder kabellos erfolgen.

Neben dem vorgenannten Verfahren zum Datenaustausch mit einer Mehrzahl von Elektrowerkzeugen wird mit der Erfindung ebenfalls ein Akku, welcher insbesondere ausgebildet ist, dieses Verfahren durchzuführen, vorgeschlagen, welcher einen Energiespeicher, eine Schnittstelle zur Datenübertragung und einen Datenspeicher aufweist, wobei in dem Datenspeicher von einer externen Rechnereinheit empfangene Steuerdaten zur Übertragung an mehrere Elektrowerkzeuge gespeichert sind.

Ebenso wird ein Set, welches insbesondere ausgebildet ist, das vorgenannte Verfahren durchzuführen, vorgeschlagen, welches eine Mehrzahl von Elektrowerkzeugen aufweist, die geeignet sind austauschbare Akkus aufzunehmen, und einen mit jedem der Elektrowerkzeuge kompatiblen Akku, welcher einen Energiespeicher, eine Schnittstelle zur Datenübertragung und einen Datenspeicher aufweist, in welchem Datenspeicher von einer externen Rechnereinheit empfangene Steuerdaten zur Übertragung an mehrere der Elektrowerkzeuge gespeichert sind. Das erfindungsgemäße Set weist dabei vorteilhaft einen Akku auf, welcher mit einer Akkuladestation verbindbar ist, die mit der externen Rechnereinheit in Datenverbindung steht. Alternativ oder zusätzlich kann der Akku jedoch auch eine Schnittstelle zur kabellosen Datenübertragung mit der externen Rechnereinheit aufweisen. Insofern ergeben sich im Rahmen der Verwendung des erfindungsgemäßen Akkus innerhalb des Sets die zuvor erläuterten Vorteile.

Im Folgenden wird die Erfindung anhand eines Ausführungsbeispiels näher erläutert. Es zeigen:
- Fig.1:: ein erfindungsgemäßes Set mit einer Mehrzahl von Elektrowerkzeugen,
- Fig. 2:: ein Akku-Ladegerät mit einem erfindungsgemäßen Akku.

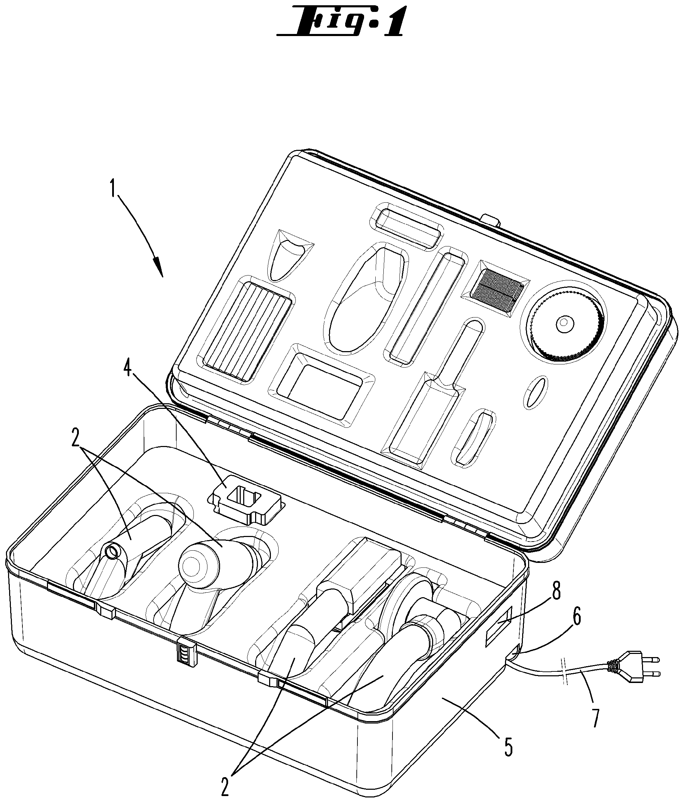

In Fig.1 ist ein erfindungsgemäßes Set 1 mit einer Mehrzahl von Elektrowerkzeugen 2 und einer Akkuladestation 4 dargestellt. Sowohl die Elektrowerkzeuge 2 als auch die Akkuladestation 4 können in eine gemeinsame Lagervorrichtung 5, hier beispielsweise ein Werkzeugkoffer, eingebracht sein. Die Lagervorrichtung 5 weist vorteilhaft eine Energiedurchführung 6 auf. Diese Energiedurchführung 6 ist beispielsweise eine Öffnung, welche ein Ladekabel 7, das mit der Akkuladestation 4 verbunden ist, aufnimmt. Darüber hinaus weist die Lagervorrichtung 5 vorteilhaft eine Datendurchführung 8 für ein Datenkabel 9 auf, welches die Akkuladestation mit einer externen Rechnereinheit 10 verbindet (in Fig.1 nicht dargestellt).

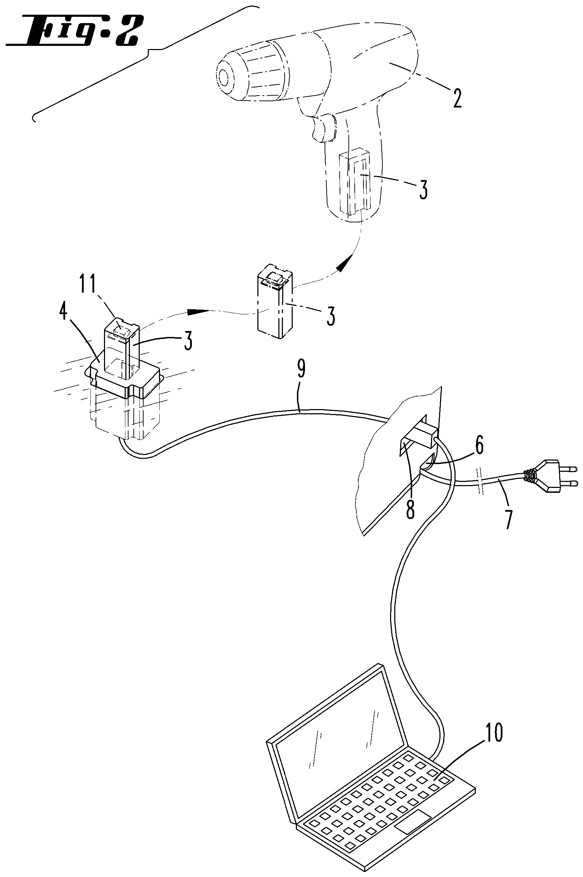

Fig. 2 zeigt einzelne Teilbereiche des Sets 1 gemäß Fig. 1. Gezeigt ist ein Elektrowerkzeug 2, hier ein Akku-Schrauber, welches geeignet ist einen erfindungsgemäßen Akku 3 aufzunehmen. Der Akku 3 befindet sich in der Akkuladestation 4. Zu erkennen ist ebenfalls ein Datenspeicher 11 des Akkus 3. Die Akkuladestation 4 ist vorteilhaft mittels eines durch die Energiedurchführung 6 gezogenen Ladekabels 7 mit einer Stromversorgung verbunden. Darüber hinaus ist die Akkuladestation 4 vorteilhaft über ein durch die Datendurchführung 8 gezogenes Datenkabel 9 mit einer externen Rechnereinheit 10, hier beispielsweise ein Laptop, verbunden.

Die Erfindung gemäß dem dargestellten Ausführungsbeispiel funktioniert so, dass die Akkuladestation 4 über das Datenkabel 9 mit der externen Rechnereinheit 10 verbunden wird. Die externe Rechnereinheit 10 beinhaltet Steuerdaten, beispielsweise eine neue Programmversion für Elektrowerkzeuge 2, welche an die betreffenden Elektrowerkzeuge 2 zu übermitteln sind. In der Akkuladestation 4 befindet sich ein Akku 3, welcher zu mehreren Elektrowerkzeugen 2, darunter auch der Akku-Schrauber gemäß Fig. 2, kompatibel ist. Die auf die Elektrowerkzeuge 2 zu übertragenden Steuerdaten werden nun zuerst über das Datenkabel 9 von der externen Rechnereinheit 10 an den Akku 3 übertragen. Dies kann während des Ladevorgangs des Akkus 3 geschehen oder alternativ auch nach einem abgeschlossenen Ladevorgang. Die Steuerdaten werden in den Datenspeicher 11 des Akkus 3 geschrieben.

In einem nächsten Schritt wird der Akku 3 nun mit dem dargestellten Elektrowerkzeug 2, dem Akku-Schrauber, verbunden. Anschließend werden die Steuerdaten von dem Datenspeicher 11 des Akkus 3 in einen Datenspeicher des Elektrowerkzeugs 2 übertragen, von wo aus diese auf dem Elektrowerkzeug 2 installiert werden können.

Alternativ zu der Übertragung der Steuerdaten mittels der Akkuladestation 4 können die Steuerdaten auch direkt kabellos - mittels einer Schnittstelle zur kabellosen Datenübertragung - von der externen Rechnereinheit 10 an den Akku 3 übermittelt werden. Diese Schnittstelle kann bspw. ein WLAN-Modul sein, welches in den Masterakku 3 eingebaut ist. Insofern kann der Datenaustausch zwischen der externen Rechnereinheit 10 und dem Akku 3 ganz ohne Datenkabel 9 bzw. Akkuladestation 4 erfolgen.

Es sind weiterhin auch andere Varianten zur Ausführung des erfindungsgemäßen Verfahrens möglich. Hierzu gehört u.a. auch, dass der Akku 3 eine Information ausgibt, wenn dieser Steuerdaten von der externen Rechnereinheit 10 empfangen hat. In diesem Fall kann eine an dem Akku 3 angeordnete Diode blinken. Alternativ ist es auch möglich, dass der Akku 3 mit einer Ausgabeeinheit verbunden ist, welche anzeigt, dass Steuerdaten verfügbar sind und für welches Elektrowerkzeug 2 diese bestimmt sind. Ebenso ist es auch möglich, dass das Akkuladegerät 4 anzeigt, dass ein in diesem angeordneter Akku 3 neue Steuerdaten beinhaltet. Gleiches gilt ebenfalls für das Elektrowerkzeug 2, in welchem sich ein Akku 3 mit neuen Steuerdaten befindet.

Sobald die Steuerdaten wie zuvor dargestellt von dem Akku 3 auf ein erstes Elektrowerkzeug 2 übertragen wurden, kann der Akku 3 wieder aus dem ersten Elektrowerkzeug 2 entfernt werden und in ein zweites Elektrowerkzeug 2 eingeführt werden, auf welches ebenfalls Steuerdaten zu übertragen sind.

Neben der zuvor dargestellten Datenübertragung von der externen Rechnereinheit 10 an ein oder mehrere Elektrowerkzeuge 2, können ebenfalls Daten von einem oder mehreren Elektrowerkzeugen 2 auf den Akku 3 übertragen werden. In diesem Fall werden beispielsweise in dem jeweiligen Elektrowerkzeug 2 gesammelte Daten, bspw. Betriebsdaten zu Benutzungshäufigkeit, Drehzahlen, Temperaturen und dergleichen, zur weiteren Auswertung an die externe Rechnereinheit 10 übertragen. Dabei übermittelt das jeweilige Elektrowerkzeug 2 die Betriebsdaten zuerst an den Akku 3, welcher diese dann zum Beispiel per Funk an die externe Rechnereinheit 10 weiterleitet. Hierfür kann ein in dem MasterAkku 3 angeordnetes WLAN-Modul benutzt werden.

Insgesamt wird somit ein Verfahren zum Datenaustausch mit einer Mehrzahl von Elektrowerkzeugen 2 bzw. ein Set 1 zur Durchführung eines solchen Verfahrens geschaffen, welches eine separate Datenschnittstelle, bspw. ein WLAN-Modul für jedes Elektrowerkzeug 2, erübrigt, sodass das Verfahren gegenüber dem Stand der Technik wesentlich kostengünstiger ausgeführt werden kann.

### Bezugszeichenliste:

- 1: Set
- 2: Elektrowerkzeug
- 3: Akku
- 4: Akkuladestation
- 5: Lagervorrichtung
- 6: Energiedurchführung
- 7: Ladekabel
- 8: Datendurchführung
- 9: Datenkabel
- 10: externe Rechnereinheit
- 11: Datenspeicher

## Patentansprüche

1. Verfahren zum Datenaustausch mit einer Mehrzahl von Elektrowerkzeugen (2), welche geeignet sind, austauschbare Akkus aufzunehmen, **dadurch gekennzeichnet, dass** ein mit jedem der Elektrowerkzeuge (2) kompatibler, einen Energiespeicher, eine Schnittstelle zur Datenübertragung und einen Datenspeicher (11) aufweisender Akku (3) Steuerdaten für mehrere der Elektrowerkzeuge (2) von einer externen Rechnereinheit (10) empfängt und in dem Datenspeicher (11) speichert, wobei der Akku (3) mit einem ersten der Mehrzahl von Elektrowerkzeugen (2) verbunden wird, wobei die für dieses erste Elektrowerkzeug (2) bestimmten Steuerdaten von dem Datenspeicher (11) des Akkus (3) in einen Datenspeicher des ersten Elektrowerkzeugs (2) übertragen werden, und woraufhin der Akku (3) aus dem ersten Elektrowerkzeug (2) wieder entfernt wird und in ein zweites Elektrowerkzeug (2) eingeführt wird, wobei die für das zweite Elektrowerkzeug bestimmten Steuerdaten von dem Datenspeicher (11) des Akkus (3) in einen Datenspeicher des verbundenen zweiten Elektrowerkzeugs (2) übertragen werden.

2. Verfahren nach Anspruch 1, **dadurch gekennzeichnet, dass** die Steuerdaten mittels einer mit der externen Rechnereinheit (10) verbundenen Akkuladestation (4) an den Akku (3) übertragen werden.

3. Verfahren nach Anspruch 1 oder 2, **dadurch gekennzeichnet, dass** die Steuerdaten per kabelloser Datenübertragung von der externen Rechnereinheit (10) an die Akkuladestation (4) oder an den Akku (3) übertragen werden.

4. Verfahren nach einem der vorhergehenden Ansprüche, **dadurch gekennzeichnet, dass** die Steuerdaten Programme zur Installation auf dem jeweiligen Elektrowerkzeug (2) aufweisen.

5. Verfahren nach einem der vorhergehenden Ansprüche, **dadurch gekennzeichnet, dass** der Akku (3) eine Information über den Empfang von Steuerdaten von einer externen Rechnereinheit (10) ausgibt.

6. Verfahren nach einem der vorhergehenden Ansprüche, **dadurch gekennzeichnet, dass** der Akku (3) Betriebsdaten von einem Elektrowerkzeug (2) empfängt.

7. Akku (3), welcher ausgebildet ist, ein Verfahren nach einem der Ansprüche 1 bis 6 durchzuführen, **gekennzeichnet durch** einen Energiespeicher, eine Schnittstelle zur Datenübertragung und einen Datenspeicher (11), in dem von einer externen Rechnereinheit (10) empfangene Steuerdaten zur Übertragung an mehrere Elektrowerkzeuge (2) gespeichert sind.

8. Set (1), welches ausgebildet ist, ein Verfahren nach einem der Ansprüche 1 bis 6 durchzuführen, aufweisend eine Mehrzahl von Elektrowerkzeugen (2), welche geeignet sind, austauschbare Akkus aufzunehmen, und einen mit jedem der Elektrowerkzeuge (2) kompatiblen Akku (3), welcher einen Energiespeicher, eine Schnittstelle zur Datenübertragung und einen Datenspeicher (11) aufweist, in welchem Datenspeicher (11) von einer externen Rechnereinheit (10) empfangene Steuerdaten zur Übertragung an mehrere der Elektrowerkzeuge (2) gespeichert sind.

9. Set (1) nach Anspruch 8, **dadurch gekennzeichnet, dass** der Akku (3) mit einer mit der externen Rechnereinheit (10) in Datenverbindung stehenden Akkuladestation (4) verbindbar ist.

10. Set (1) nach Anspruch 8 oder 9, **dadurch gekennzeichnet, dass** der Akku (3) eine Schnittstelle zur kabellosen Datenübertragung mit der externen Rechnereinheit (10) aufweist.

## Claims

1. Method for exchanging data with a plurality of electronic tools (2) suitable for receiving exchangeable batteries, **characterised in that** a battery (3), which is compatible with each of the electronic tools (2) and which comprises an energy store, an interface for data transmission and a data store (11), receives control data for a plurality of the electronic tools (2) from an external processing unit (10) and stores said data in the data store (11), the battery (3) being connected to a first of the plurality of electronic tools (2), the control data intended for said first electronic tool (2) being transmitted from the data store (11) of the battery (3) into a data store of the first electronic tool (2), and the battery (3) subsequently being removed again from the first electronic tool (2) and inserted into a second electronic tool (2), the control data intended for the second electronic tool being transmitted from the data store (11) of the battery (3) into a data store of the connected second electronic tool (2).

2. Method according to claim 1, **characterised in that** the control data are transmitted to the battery (3) by means of a battery charging station (4) connected to the external processing unit (10).

3. Method according to either claim 1 or claim 2, **characterised in that** the control data are transmitted from the external processing unit (10) to the battery charging station (4) or to the battery (3) by wireless data transmission.

4. Method according to any of the preceding claims, **characterised in that** the control data comprise programs for being installed on the relevant electronic tool (2).

5. Method according to any of the preceding claims, **characterised in that** the battery (3) outputs information relating to the reception of control data from an external processing unit (10).

6. Method according to any of the preceding claims, **characterised in that** the battery (3) receives operational data from an electronic tool (2).

7. Battery (3) that is designed to carry out a method according to any of claims 1 to 6, **characterised by** an energy store, an interface for data transmission and a data store (11), in which data store control data received from an external processing unit (10) and intended for being transmitted to a plurality of electronic tools (2) are stored.

8. Set (1) that is designed to carry out a method according to any of claims 1 to 6, comprising a plurality of electronic tools (2), which are designed to receive exchangeable batteries, and a battery (3), which is compatible with each of the electronic tools (2) and which comprises an energy store, an interface for data transmission and a data store (11), in which data store (11) control data received from an external processing unit (10) and intended for being transmitted to a plurality of electronic tools (2) are stored.

9. Set (1) according to claim 8, **characterised in that** the battery (3) can be connected to a battery charging station (4) in data communication with the external processing unit (10).

10. Set (1) according to either claim 8 or claim 9, **characterised in** the battery (3) comprises an interface for wireless data transmission with the external processing unit (10).

## Revendications

1. Procédé d'échange de données avec une pluralité d'outils électriques (2) lesquels sont adaptés pour recevoir des batteries rechargeables de manière remplaçable, **caractérisé en ce qu'**une batterie rechargeable (3) compatible avec chacun des outils électriques (2) et comprenant un accumulateur d'énergie, une interface pour la transmission de données et une mémoire de données (11), reçoit d'une unité de traitement externe (10) des données de commande pour plusieurs des outils électriques (2) et les stockent dans la mémoire de données (11), dans lequel la batterie rechargeable (3) est raccordée avec un premier de la pluralité d'outils électriques (2), les données de commande destinées à ce premier outil électrique (2) étant alors transférées de la mémoire de données (11) de la batterie rechargeable (3) dans une mémoire de données du premier outil électrique (2), et à la suite de quoi la batterie rechargeable (3) est à nouveau retirée du premier outil électrique (2) et insérée dans un deuxième outil électrique (2), les données de commande destinées au deuxième outil électrique étant alors transférées de la mémoire de données (11) de la batterie rechargeable (3) dans une mémoire de données du deuxième outil électrique raccordée (2).

2. Procédé selon la revendication 1, **caractérisé en ce que** les données de commande sont transférées à la batterie rechargeable (3) au moyen d'une station de charge de batterie (4) qui est raccordée avec l'unité de traitement externe (10).

3. Procédé selon la revendication 1 ou 2, **caractérisé en ce que** les données de commande sont transférées de l'unité de traitement externe (10) à la station de charge de batterie (4) ou à la batterie rechargeable (3) par une transmission de données sans fil.

4. Procédé selon l'une des revendications précédentes, **caractérisé en ce que** les données de commande comprennent des programmes pour installation sur l'outil électrique respectif (2).

5. Procédé selon l'une des revendications précédentes, **caractérisé en ce que** la batterie rechargeable (3) fournit une information concernant la réception de données de commande d'une unité de traitement externe (10).

6. Procédé selon l'une des revendications précédentes, **caractérisé en ce que** la batterie rechargeable (3) reçoit des données de fonctionnement d'un outil électrique (2).

7. Batterie rechargeable (3), laquelle est conçue pour mettre en oeuvre un procédé selon l'une des revendications 1 à 6, **caractérisée par** un accumulateur d'énergie, une interface pour la transmission de données et une mémoire de données (11) dans laquelle sont stockées des données de commande reçues d'une unité de traitement externe (10) pour la transmission à plusieurs outils électriques (2).

8. Ensemble (1) qui est conçu pour mettre en oeuvre un procédé selon l'une des revendications 1 à 6, comprenant une pluralité d'outils électriques (2) qui sont adaptés pour recevoir des batteries rechargeables de manière remplaçable, et une batterie rechargeable (3) compatible avec chacun des outils électriques (2) laquelle comprend un accumulateur d'énergie, une interface pour la transmission de données et une mémoire de données (11) dans laquelle sont stockées des données de commande reçues d'une unité de traitement externe (10) pour la transmission à plusieurs outils électriques (2).

9. Ensemble (1) selon la revendication 8, **caractérisé en ce que** la batterie rechargeable (3) est susceptible d'être raccordée à une station de charge de batterie (4) qui est en liaison de données avec l'unité de traitement externe (10).

10. Ensemble (1) selon la revendication 8 ou 9, **caractérisé en ce que** la batterie rechargeable (3) comprend une interface pour la transmission de données sans fil avec l'unité de traitement externe (10).
